# EUROPÄISCHE PATENTSCHRIFT

(11) **EP 3 377 436 B1**
(45) Veröffentlichungstag und Bekanntmachung des Hinweises auf die Patenterteilung: **28.08.2019**
(21) Anmeldenummer: 16797934.3
(22) Anmeldetag: 18.11.2016
(51) Int. Cl.: B66B 19/00, B66B 5/00

(54) **VERFAHREN ZUM BESTIMMEN VON INFORMATIONEN ÜBER IN EINEM AUFZUGSCHACHT AUFGENOMMENE AUFZUGKOMPONENTEN UND AUFZUGANLAGE**
METHOD FOR DETERMINING INFORMATION REGARDING ELEVATOR COMPONENTS IN AN ELEVATOR SHAFT AND ELEVATOR
PROCEDE DE DETERMINATION D'INFORMATIONS CONCERNANT DES COMPOSANTS D'ASCENSEUR LOGES DANS UNE CABINE D'ASCENSEUR ET ASCENSEUR

(30) Priorität: 19.11.2015 EP 15195409
(43) Veröffentlichungstag der Anmeldung: 26.09.2018
(73) Patentinhaber: Inventio AG, 6052 Hergiswil (CH)
(72) Erfinder: STUDER, Christian, 6010 Kriens (CH); ZIMMERLI, Philipp, 4624 Härkingen (CH)
(86) Internationale Anmeldenummer: PCT/EP2016/078094
(87) Internationale Veröffentlichungsnummer: WO 2017/085238

(56) Entgegenhaltungen:
- WO-A1-2004/069714
- WO-A1-2014/027142
- CN-U- 204 251 103
- JP-A- 2009 062 145
- JP-A- 2009 161 310
- JP-A- 2011 148 570

## Beschreibung

Die vorliegende Erfindung betrifft ein Verfahren zum Bestimmen und gegebenenfalls Protokollieren von Informationen über in einem Aufzugschacht einer Aufzuganlage aufgenommene Aufzugkomponenten.

Aufzüge werden im Allgemeinen dazu eingesetzt, Personen oder Gegenstände innerhalb eines Bauwerks in einer im Regelfall vertikalen Richtung transportieren zu können. Hierzu wird in oder außen an dem Bauwerk ein Aufzugschacht vorgesehen, innerhalb dessen verfahrbare Aufzugelemente wie beispielsweise eine oder mehrere Aufzugkabinen, ein Gegengewicht oder Ähnliches verfahren werden können. Die verfahrbaren Aufzugelemente werden dabei meist mithilfe von Tragmitteln wie z.B. Seilen oder Riemen bewegt, die ihrerseits von einer mittels eines Motors angetriebenen Treibscheibe bewegt werden. Daneben gibt es auch Aufzüge, die hydraulisch betätigt werden.

Neben den genannten verfahrbaren Aufzugelementen ist im Regelfall eine Vielzahl anderer Aufzugkomponenten in dem Aufzugschacht angeordnet. Beispielsweise sind in dem Aufzugschacht meistens Führungsschienen fest verankert, entlang derer die verfahrbaren Aufzugelemente geführt bewegt werden können. Am Boden des Aufzugschachts ist meist ein Puffer vorgesehen, um beispielsweise im Falle einer Fehlfunktion oder eines Defekts in der Aufzuganlage ein hartes Aufschlagen der Aufzugkabine auf dem Boden zu vermeiden. Meist nahe einer Decke des Aufzugschachts ist bei vielen Aufzugtypen eine Antriebseinheit vorgesehen, welche zum Beispiel die Tragmittel antreibt und dadurch die an diesen Tragmitteln befestigten verfahrbaren Aufzugelemente innerhalb des Aufzugschachts bewegt. An verschiedenen Stockwerken des Bauwerks sind in dem Aufzugschacht meist automatisch bewegbare Türen vorgesehen, welche einen Zugang zu der in einem bestimmten Stockwerk angehaltenen Aufzugkabine freigeben können bzw. diesen blockieren können, sobald die Aufzugkabine sich von diesem Stockwerk wegbewegt. Ferner können in dem Aufzugschacht diverse andere Aufzugkomponenten aufgenommen sein wie beispielsweise ergänzende sicherheitsrelevante Aufzugkomponenten in Form von Sensoren, Schaltern, Detektoren, Notbremsvorrichtungen, Evakuierungsvorrichtungen etc.

Bei einem erstmaligen Herstellen einer Aufzuganlage und gegebenenfalls auch bei später erfolgenden Wartungen der Aufzuganlage ist es gängige Praxis mancher Hersteller bzw. Betreiber, abschließend eine Inspektion oder Endabnahme der in dem Aufzugschacht aufgenommenen Aufzugkomponenten durchzuführen. Eine solche Inspektion umfasst im Regelfall zumindest ein Notieren von Seriennummern sowie eines Typs der aufgenommenen Aufzugkomponenten. Im Fall von sicherheitsrelevanten Aufzugkomponenten wird üblicherweise ergänzend eine Zertifikatnummer aufgenommen.

Der Inspektions- bzw. Protokollierungsvorgang wird bisher meist manuell von einer Person wie beispielsweise einem Inspektor durchgeführt, wobei die Person alle in dem Aufzugschacht aufgenommenen Aufzugkomponenten inspizieren, mit Soll-Vorgaben vergleichen und ein entsprechendes Protokoll erstellen muss. Dies kann einen erheblichen Arbeitsaufwand mit sich bringen.

Die JP 2009 062145 A beschreibt ein Verfahren, bei welchem Betriebszustände von Aufzugkomponenten in einem Aufzugschacht automatisiert ausgelesen werden können. Die JP 2011 148570 A beschreibt ein Verfahren zur Erstellung eines Berichts über eine Wartung eines Aufzugs, bei welchem Barcodes verwendet werden.

Die JP 2009161310 A beschreibt eine Vorrichtung zur Wartung eines Aufzugs, welches so genannte RFID-Tags auswerten kann.

Die CN 204 251 103 U beschreibt ein Verfahren zur Bestimmung einer Position eines Hubkorbs eines Bauaufzugs in einem Aufzugschacht. Zur Bestimmung der Position wird eine Signalstärke eines RFID UHF Signals ausgewertet.

Die WO 2004/069714 A1 beschreibt ein Verfahren zur Bestimmung einer Position einer Aufzugkabine eines Aufzugs auf Basis von Ultraschall oder elektromagnetischen Wellen, JP 2009 062145 A und WO 2014/027142 A offenbaren ein Verfahren gemäß dem Oberbegriff des Anspruchs 1.

Es kann daher ein Bedarf an einem Verfahren bestehen, bei dem Informationen über in einem Aufzugschacht aufgenommene Aufzugkomponenten einfach, schnell und/oder mit geringem Arbeitsaufwand sowie gleichzeitig hoher Sicherheit aufgenommen und mit Soll-Vorgaben verglichen werden können. Außerdem kann ein Bedarf an einer entsprechend ausgelegten Aufzuganlage bestehen.

Ein solcher Bedarf kann mit einem Verfahren gemäß dem Hauptanspruch sowie einer Aufzuganlage gemäß dem nebengeordneten Anspruch der vorliegenden Anmeldung gedeckt werden. Vorteilhafte Ausführungsformen sind in den abhängigen Ansprüchen sowie der nachfolgenden Beschreibung angegeben.

Gemäß einem Aspekt der vorliegenden Erfindung wird ein Verfahren zum Bestimmen von Informationen über in einem Aufzugschacht aufgenommene Aufzugkomponenten. Die Aufzugkomponenten verfügen über jeweils einen maschinenlesbaren Marker, auf oder mit dem komponentenspezifische Information gespeichert ist; welche mit einem Markerlesegerät ausgelesen werden können. Ein verfahrbares Aufzugelement, an welchem das Markerlesegerät angeordnet ist, wird durch den Aufzugschacht verfahren und dabei wird die komponentenspezifische Information aus den Markern ausgelesen. Erfindungsgemäß umfasst das Verfahren ferner ein Vergleichen der ausgelesenen komponentenspezifischen Informationen mit Soll-Vorgaben. Das Verfahren umfasst ergänzend ein Ausgeben eines Protokolls, welches Übereinstimmungen und/oder Unterschiede zwischen den ausgelesenen komponentenspezifischen Informationen einerseits und den Soll-Vorgaben andererseits angibt. Das genannte Vergleichen und Ausgeben eines Protokolls erfolgt automatisiert, ohne dass eine Person beispielsweise ein Inspektor die Ist-Vorgaben und die Soll-Vorgaben vergleichen und das Ergebnis des Vergleichs in das Protokoll eingeben müsste. Es ist allenfalls ein manueller Start des Vergleichs und/oder des Ausgebens des Protokolls notwendig.

Mögliche Merkmale und Vorteile von Ausfiihrungsformen der Erfindung können unter anderem und ohne die Erfindung einzuschränken als auf nachfolgend beschriebenen Ideen und Erkenntnissen beruhend angesehen werden.

Die Soll-Vorgaben geben hierbei an, welche Aufzugkomponenten beispielsweise im Rahmen einer Konzipierung einer Aufzuganlage in dem Aufzugschacht aufgenommen werden sollen. Dabei kann ein Standard vorgesehen sein, der für jede aufzunehmende Aufzugkomponente regelt, welche komponentenspezifischen Informationen für diese Aufzugkomponente als relevant zu erachten sind. Einem solchen Standard folgend können dann für jede konzeptionsgemäß aufzunehmende Aufzugkomponente entsprechende Soll-Vorgaben getroffen werden. In dem an der konkreten Aufzugkomponente angebrachten Marker sind dann die für diese Aufzugkomponente tatsächlich zutreffenden komponentenspezifischen Informationen gespeichert. Durch Vergleich der tatsächlichen komponentenspezifischen Informationen mit den Soll-Vorgaben kann dann beispielsweise festgestellt werden, ob die richtigen, bei der Konzeption der Aufzuganlage angenommenen Aufzugkomponenten tatsächlich auch verbaut wurden, ob diese in korrekter Weise und an korrektem Ort verbaut wurden etc. Übereinstimmungen und/oder Unterschiede zwischen den tatsächlichen, aus den jeweiligen Markern ausgelesenen Informationen über die verbauten Aufzugkomponenten und gegebenenfalls deren Installation einerseits und den Soll-Vorgaben andererseits können dann in einem Protokoll gesammelt werden. Das Protokoll kann wiederum in einer für Menschen lesbaren Form oder maschinenlesbar erstellt werden.

Es wird davon ausgegangen, dass in Zukunft eine Komplexität von Aufzuganlagen zunehmen wird und entsprechend zunehmend mehr Aufzugkomponenten innerhalb eines Aufzugschachts anzuordnen sind. Beispielsweise werden Sicherheitsstandards sukzessive erhöht und zu deren Erfüllung immer mehr Aufzugkomponenten in Form von beispielsweise Sensoren, Detektoren etc. innerhalb des Aufzugschachts nötig. Außerdem können Aufzuganlagen zunehmend mit Komfortfunktionen ausgestattet werden, die ebenfalls ein Installieren zusätzlicher Aufzugkomponenten innerhalb des Aufzugschachts erforderlich machen können. Die hieraus resultierende Vielzahl von Aufzugkomponenten innerhalb des Aufzugschachts kann eine Inspektion derselben bzw. ein Protokollieren von Informationen über diese Aufzugkomponenten sehr aufwendig gestalten.

Außerdem können zunehmend Situationen auftreten, in denen Aufzugkomponenten an beispielsweise schwer zugänglichen Bereichen des Aufzugschachts angebracht werden, so dass beispielsweise an einer Aufzugkomponente angebrachte Aufkleber oder Schilder, auf denen Informationen über die Aufzugkomponente für einen menschlichen Inspektor lesbar dargestellt sind, nicht oder nur schwer erkennbar sein können.

Außerdem können sich für einen menschlichen Inspektor bei der Inspektion bzw. der Protokollierung der Aufzugkomponenten gefährliche Situationen ergeben, da dieser beispielsweise auf dem Dach der Aufzugkabine stehend entlang des gesamten Aufzugschachts verfahren werden muss.

Es wird daher vorgeschlagen, den Prozess des Bestimmens von Informationen über in einem Aufzugschacht aufgenommene Aufzugkomponenten zu automatisieren.

Hierzu wird vorgeschlagen, jede der zu bestimmenden Aufzugkomponenten mit einem maschinenlesbaren Marker zu versehen. Auf oder mit dem Marker können komponentenspezifische Informationen gespeichert sein. Solche komponentenspezifische Informationen können beispielsweise eine Seriennummer der Aufzugkomponente, ein Typ der Aufzugkomponente, ein Herstellungsdatum der Aufzugkomponente, eine Zertifizierung der Aufzugkomponente etc. sein. Solche komponentenspezifischen Informationen können einer jeweiligen Aufzugkomponente bereits nach deren Fertigstellung immanent sein und können beispielsweise bereits vorab von einem Hersteller der Aufzugkomponente erfasst und auf dem Marker gespeichert werden.

Die genannte komponentenspezifische Information spezifiziert insbesondere von einem Betriebszustand der Komponente unabhängige Eigenschaften. Derartige Eigenschaften sind beispielsweise unveränderliche Eigenschaften der Komponente, wie die oben genannten Informationen Seriennummer, Typ, Herstellungsdatum oder Zertifizierung, aber auch an der Komponente eingestellte Parameter, wie eine Auslösegeschwindigkeit einer Übergeschwindigkeitsüberwachungseinrichtung. Die komponentenspezifische Information kann auch insbesondere dazu geeignet sein, die im Aufzugschacht angebrachten Aufzugskomponenten, beispielsweise anhand ihrer Seriennummer, eindeutig zu identifizieren. Die Spezifizierung von vom Betriebszustand der Komponente unabhängigen Eigenschaften kann auch ohne das Vergleichen der ausgelesenen komponentenspezifischen Informationen mit Soll-Vorgaben und das Ausgeben eines Protokolls, welches Übereinstimmungen und/oder Unterschiede zwischen den ausgelesenen komponentenspezifischen Informationen einerseits und den Soll-Vorgaben andererseits angibt, vorteilhaft verwendet werden.

Unter einer Speicherung von komponentenspezifischer Information mit einem Marker soll hier verstanden werden, dass die Information durch eine Beschaffenheit und/oder eine Position des Markers repräsentiert wird. Beispielsweise kann ein Marker eine Markierung mit einer bestimmten Form und/oder Farbe sein, wobei der Form und der Farbe eine bestimmte Information zugeordnet ist. Der Marker kann auch von der Form der Aufzugskomponente selbst gebildet werden, so dass die komponentenspezifische Information durch eine Ausrichtung oder Orientierung der Aufzugskomponente repräsentiert wird. Beispielsweise kann ein Sechskant-Schraubenkopf einer Schraube einen Marker bilden.

Wenn die genannte Information durch die Position eines Markers repräsentiert wird, kann sich die Position beispielsweise bei der Montage der Komponente ergeben. Der Marker kann beispielsweise als eine Markierung auf einem Schraubenkopf einer Schraube ausgeführt sein, so dass die Position der Markierung eine Winkelposition der Schraube angibt. Aus einer Änderung der Position der Markierung kann dann beispielsweise auf eine Änderung der Winkelposition der Schraube geschlossen werden, also beispielsweise, dass sich die Schraube ein wenig gelöst hat. Wenn wie oben beschrieben ein Sechskant-Schraubenkopf der Schraube den Marker bildet, gibt die Orientierung des Schraubenkopfs die Winkelposition der Schraube an. Aus einer Änderung der genannten Orientierung des Schraubenkopfs kann ebenfalls geschlossen werden, dass sich die Schraube ein wenig gelöst hat. Bei einem Sechskant-Schraubenkopf wäre eine Erkennung nur dann nicht möglich, wenn sich die Orientierung um genau 60° oder ein Vielfaches davon geändert hat. Dieser Fall ist allerdings sehr unwahrscheinlich.

Es ist dabei möglich, dass nicht alle verwendeten Schrauben mit einer Markierung versehen oder als Marker angesehen werden, sondern nur solche Schrauben, deren Zustand protokolliert und gegebenenfalls überprüft werden müssen.

Die Marker sollen dabei maschinenlesbar sein. Mit anderen Worten soll die komponentenspezifische Information in dem Marker in einer Weise gespeichert und auslesbar sein, dass sie von einer Maschine wie beispielsweise einem speziellen Lesegerät einfach und in eindeutiger Weise ausgelesen und gegebenenfalls verarbeitet werden können. Beispielsweise können die Informationen in digitaler Form gespeichert sein. Eine Speicherung der Informationen sowie eine maschinelle Auslesbarkeit der Informationen kann sich dabei verschiedener physikalischer Prinzipien bedienen. Beispielsweise können die Informationen elektrisch, magnetisch, optisch, mechanisch oder in anderer Weise gespeichert und/oder ausgelesen werden. Konkrete Ausführungsbeispiele werden weiter unten detailliert erläutert.

Um die Informationen über alle in einem Aufzugschacht konkret verbauten Aufzugkomponenten dann beispielsweise im Rahmen eines Inspektions- oder Protokollierungsvorgangs aufnehmen zu können, wird ein Markerlesegerät an das in dem Aufzugschacht verfahrbare Aufzugelement, beispielsweise an die Aufzugkabine, angebracht. Das Markerlesegerät kann speziell an die an den Aufzugkomponenten angebrachten Marker angepasst sein und dazu ausgelegt sein, die darin gespeicherten komponentenspezifischen Informationen auszulesen. Je nach Art der eingesetzten Marker kann auch das Markerlesegerät auf unterschiedlichen physikalischen Prinzipien beruhend konzipiert sein.

Das Markerlesegerät kann prinzipiell in beliebiger Weise an dem verfahrbaren Aufzugelement angebracht werden, solange dadurch bewirkt werden kann, dass das Markerlesegerät zusammen mit dem entsprechenden Aufzugelement innerhalb des Aufzugschachts verfahren werden kann. Beispielsweise kann das Markerlesegerät an einem Dach und/oder einem Boden der Aufzugkabine angebracht werden. Vorzugsweise wird das Markerlesegerät lediglich temporär, das heißt lediglich für den Zeitraum des Durchführens des Inspektions- bzw. Protokollierungsvorgangs, an dem verfahrbaren Aufzugelement angebracht.

Dann wird das verfahrbare Aufzugelement mitsamt dem Markerlesegerät durch den Aufzugschacht verfahren und dabei automatisiert jeweils die komponentenspezifischen Informationen aus jedem der an den verschiedenen Aufzugkomponenten angebrachten Marker ausgelesen. Unter einem automatisierten Auslesen wird dabei verstanden, dass die Informationen vorzugsweise ohne eine Notwendigkeit einer Interaktion von einem Menschen ausgelesen werden können. Mit anderen Worten können die Informationen, nachdem das Markerlesegerät an dem verfahrbaren Aufzugelement angebracht wurde, im Rahmen eines automatisierten Vorgangs selbsttätig ausgelesen und dann beispielsweise protokolliert und/oder verifiziert werden.

Wenn die Marker als Markierungen auf Schraubenköpfen ausgeführt sind oder die Schraube bzw. deren Schraubenkopf als Marker angesehen wird, kann das beschriebene Verfahren eines Markerlesegeräts und Auslesen der komponentenspezifischen Informationen auch dazu genutzt werden, den Zustand der entsprechenden Schrauben zu überprüfen. Es kann beispielsweise mit einer Kamera die Position der Markierung oder des Schraubenkopfs einer Schraube erfasst und mit einer gespeicherten Position beispielsweise nach einer Erstmontage oder einer letzten Überprüfung verglichen werden. Hat sich die genannte Position nicht geändert oder ist eine Abweichung zur gespeicherten Position nicht grösser als ein Grenzwert, so kann davon ausgegangen werden, dass die Schraube sich nicht gelöst hat und kein Nachziehen der Schraube notwendig ist. Ist die genannte Abweichung allerdings zu groß, dann kann damit eine Überprüfung der Schraube veranlasst werden. Die genannte Kamera kann dabei nur zeitweise oder auch dauerhaft an dem verfahrbaren Aufzugelement angebracht sein.

Wenn das beschriebene Verfahren eines Markerlesegeräts und Auslesen der komponentenspezifischen Informationen nicht im Zuge des erstmaligen Herstellens einer Aufzuganlage, sondern erst später beispielsweise im Zuge einer bevorstehenden Wartung durchgeführt wird, dann kann durch einen Vergleich der Seriennummern im letzten und im aktuellen Protokoll festgestellt werden, ob Aufzugskomponenten ausgetauscht wurden. Es kann außerdem festgestellt werden, ob die eingebauten Aufzugskomponenten überhaupt für die vorliegende Aufzugsanlage verwendet werden können oder dürfen. Dazu können die Marker auch zusätzliche Informationen wie beispielsweise eine Information über den Hersteller der Komponente oder ähnliches enthalten. Um Fälschungen zu verhindern, können die Informationen auch verschlüsselt auf dem Marker gespeichert sein.

Gemäß einer Ausführungsform sind die Marker berührungslos auslesbar. Eine berührungslose Auslesbarkeit kann dahingehend vorteilhaft sein, dass das Markerlesegerät nicht in direkten mechanischen Kontakt zu jedem der Marker gebracht werden braucht, um die komponentenspezifische Information daraus auszulesen. Stattdessen kann es genügen, das Markerlesegerät lediglich in die Nähe eines Markers zu bringen, um dann dessen Information berührungslos auslesen zu können. Zum Beispiel kann es genügen, das Markerlesegerät lediglich bis auf minimal 0,1m, vorzugsweise lediglich bis auf minimal Im oder minimal 2m, an einen der auszulesenden Marker heranzubringen. Mithilfe von berührungslos auslesbaren Markern können beispielsweise auch solche Aufzugkomponenten inspiziert bzw. protokolliert werden, die an schwierig zugänglichen Bereichen des Aufzugschachts installiert sind.

Gemäß einer Ausführungsform sind die Marker elektromagnetisch auslesbar. Elektromagnetisch auslesbare Marker können berührungslos ausgelesen werden, indem beispielsweise die darin gespeicherte Information kodierende elektromagnetische Strahlung von dem Marker hin zu dem Markerlesegerät übertragen wird und dadurch die entsprechende Information von dem Markerlesegerät automatisiert ausgelesen werden kann.

Gemäß einer konkreten Ausführungsform können die Marker RFID-Tags sein. RFID (Radio-Frequency Identification) bezeichnet eine Technologie für Sender-Empfänger-Systeme zum automatischen und berührungslosen Identifizieren, Lokalisieren oder Ähnliches von Objekten mithilfe von Radiowellen. Ein RFID-System besteht dabei im Regelfall aus einen RFID-Tag, teilweise auch als Transponder bezeichnet, der sich an oder in dem betreffenden Objekt befindet und auf dem eine gewünschte Information kodifiziert gespeichert sein kann, sowie einem Lesegerät, mithilfe dessen diese Information ausgelesen werden kann. RFID-Tags können dabei inzwischen sehr klein und kostengünstig bereitgestellt werden.

Im hier vorgestellten System können RFID-Tags an jeder zu bestimmenden Aufzugkomponente angebracht werden. Beispielsweise kann ein RFID-Tag in Form eines Aufklebers auf die Aufzugkomponente aufgeklebt werden. In dem RFID-Tag können die komponentenspezifischen Informationen zu dieser Aufzugkomponente gespeichert sein. Ferner können gegebenenfalls weitere Informationen nachträglich auf das RFID-Tag gespeichert werden.

Zum berührungslosen Auslesen eines RFID-Tags braucht im Regelfall keine direkte "Sichtverbindung" zwischen dem RFID-Tag und dem Markerlesegerät bestehen, da die zur Datenübertragung eingesetzten Radiowellen durch viele optisch opak wirkenden Materialien hindurchtreten können. Dadurch können auch Marker einfach ausgelesen werden, die an schwer zugänglichen oder optisch schwierig zu inspizierenden Bereichen des Aufzugschachts angebracht sind. Außerdem ist ein Auslesen von RFID-Tags im Regelfall verhältnismäßig unempfindlich gegenüber oberflächlichen Verschmutzungen des RFID-Tags.

Gemäß einer weiteren konkreten Ausführungsform können die Marker UHF-RFID-Tags sein. Während gewöhnliche RFID-Tags meist für einen Betrieb in einem langwelligen Frequenzbereich von zum Beispiel zwischen 100 kHz und 1 MHz oder einem kurzwelligen Frequenzbereich beispielsweise von bis zu 20 MHz ausgelegt sind, sind UHF-RFID-Tags für einen Betrieb in einem sehr viel hochfrequenteren Frequenzbereich von mehr als 100 MHz, beispielsweise ca. 900 MHz, ausgelegt.

Es wird davon ausgegangen, dass solche UHF-RFID-Tags insbesondere bei Umgebungsbedingungen, wie sie in einem Aufzugschacht herrschen, für eine bessere Datenübertragungsmöglichkeit sorgen können als niederfrequenter arbeitende RFID-Tags. Insbesondere wird davon ausgegangen, dass in dem Aufzugschacht die Vielzahl von dort typischerweise installierten metallischen Komponenten eine elektromagnetische Datenübertragung zwischen einem als Marker dienenden RFID-Tag und einem entsprechenden Lesegerät erschweren können und UHF-RFID-Tags durch die von ihnen eingesetzte höherfrequente Datenübertragung weniger empfindlich auf Störungen durch angrenzende metallische Bauteile reagieren können.

Gemäß einer alternativen oder ergänzenden Ausführungsform können die Marker optisch auslesbar sein. Beispielsweise können auf solchen Markern Informationen in einem visuell erkennbaren optischen Spektralbereich (ca. 400 bis 800 nm), oder alternativ auch in einem UV- oder IR-Spektralbereich dargestellt sein. Solche optisch auslesbaren Marker können beispielsweise mithilfe einer hierfür speziell angepassten Kamera ausgelesen werden.

In einer konkreten Ausführungsform können die Marker zum Beispiel Barcodes oder QR-Codes sein. Die Marker können auch als Markierung beispielsweise auf Schraubenköpfen ausgeführt sein, wie sie oben beschrieben sind.

Ein Barcode, welcher teilweise auch als Strichcode, Balkencode oder Streifencode bezeichnet wird, ist eine Folge von verschieden breiten und im Regelfall parallel zueinander angeordneten Strichen und Lücken, welche zur optoelektronisch auslesbaren Abbildung von Daten in Form von binären Symbolen dienen. Die in einem solchen Barcode gespeicherte Information kann mithilfe eines optischen Lesegeräts wie zum Beispiel einem Scanner oder einer Kamera maschinell ausgelesen und elektronisch weiterverarbeitet werden.

Ein QR-Code (Quick Response) stellt darin gespeicherte Informationen ebenfalls wie ein Barcode in optisch auslesbarer Weise dar. Allerdings sind die Informationen bei einem QR-Code als zweidimensionales Muster gespeichert, wohingegen ein Barcode aus einer eindimensionalen Folge von Streifen aufgebaut ist.

Sowohl Barcodes als auch QR-Codes können berührungslos ausgelesen werden und eignen sich somit sehr gut zum Speichern und Wiedergeben komponentenspezifischer Information von Aufzugkomponenten im Rahmen des hierin vorgestellten Verfahrens. Allerdings muss zum Auslesen von Markern in Form von Barcodes oder QR-Codes im Regelfall eine direkte visuelle Verbindung zwischen dem Marker und dem Markerlesegerät herstellbar sein, so dass ein Auslesen von darauf gespeicherter Information gegebenenfalls schwierig sein kann, insbesondere wenn eine Aufzugkomponente an einem schwierig zugänglichen Bereich des Aufzugschachts installiert ist. Außerdem können Verschmutzungen auf dem Barcode bzw. QR-Code ein optisches Auslesen der darin gespeicherten Information erschweren.

Gemäß einer Ausführungsform können die Marker, insbesondere die obengenannten RFID-Tags, passive Bauteile sein. Unter einem passiven Bauteil wird in diesem Zusammenhang ein Bauteil verstanden, das über keine eigene Energieversorgung verfügt. Ein passives Bauteil braucht beispielsweise nicht mit einer Stromquelle verbunden sein. Eine Verwendung passiv arbeitender Marker kann vermeiden, dass jeder Marker mit einer eigenen Energiequelle versorgt werden muss und hierzu beispielsweise über Kabel mit einer elektrischen Stromquelle verbunden werden muss.

RFID-Tags können prinzipiell sowohl als passive als auch als aktive Bauteile bereitgestellt werden. Ein aktives RFID-Tag sendet dabei aktiv Radiowellen aus, in denen eine gewünschte Information kodiert ist. Hierfür braucht das aktive RFID-Tag eine Energiequelle. Ein passives RFID-Tag beruht im Allgemeinen auf einer kodierenden Reflexion oder Rücksendung eingestrahlter Radiowellen und benötigt hierfür keine eigene Energiequelle. Beispielsweise von dem Lesegerät eingestrahlte Radiowellen werden dabei in dem passiven RFID-Tag zunächst zumindest partiell absorbiert und dann in kodierender Weise rückreflektiert bzw. rückgesendet hin zu dem Lesegerät.

Gemäß einer Ausführungsform kann bei Installation einer Aufzugkomponente ergänzend installationsspezifische Information auf dem Marker gespeichert werden. Während des Verfahrens des verfahrbaren Aufzugelements samt dem daran angebrachten Markerlesegerät kann dann auch die installationsspezifische Information aus jedem der Marker ausgelesen werden. Dieses Speichern auf dem Marker und spätere Auslesen von installationsspezifischen Informationen kann auch ohne das Vergleichen von ausgelesenen komponentenspezifischen Informationen mit Soll-Vorgaben und dem Ausgeben eines Protokolls, welches Übereinstimmungen und/oder Unterschiede zwischen den ausgelesenen komponentenspezifischen Informationen einerseits und den Soll-Vorgaben andererseits angibt, vorteilhaft angewandt werden.

Unter installationsspezifischen Informationen können dabei Informationen verstanden werden, die vor einer Installation der Aufzugkomponente in dem Aufzugschacht, das heißt beispielsweise direkt nach der Herstellung der Aufzugkomponente, im Regelfall noch nicht bekannt sind, sondern erst bei der Installation bzw. nach der Installation bekannt werden. Der Begriff "installationsspezifisch" soll dabei breit ausgelegt werden und z.B. auch Informationen umfassen, die erst bei Wartungsarbeiten an der Aufzuganlage und/oder deren Aufzugkomponenten bekannt werden.

Beispielsweise kann eine Art, wie eine Aufzugkomponente in dem Aufzugschacht montiert wird, und/oder ein Ort, an dem eine Aufzugkomponente in dem Aufzugschacht montiert wird, und/oder eine Orientierung, mit der eine Aufzugkomponente innerhalb des Aufzugschachts installiert wird, als eine solche installationsspezifische Information angesehen werden. Auch ein Montagezeitpunkt und/oder eine Identifikation der die Montage durchführenden Person können als installationsspezifische Information angenommen werden. Somit können mithilfe einer installationsspezifischen Information zum Beispiel eine Position oder Lage von Aufzugkomponenten-bildenden Teilen einer Aufzuganlage im Aufzugschacht kodifiziert und in dem maschinenlesbaren Marker gespeichert werden.

Beispielsweise können Schrauben, Schraubanker, Schraubenbolzen etc. jeweils mit einem Marker wie beispielsweise einem RFID-Tag ausgerüstet werden. Ein diese Aufzugkomponenten montierender Installateur kann dann nach der Installation eine entsprechende installationsspezifische Information auf diesem Marker speichern. Beispielsweise kann eine Lage oder Position einer Schraube gespeichert werden. Auch ein zum Installieren der Schraube eingesetztes Werkzeug und/oder ein zum Anziehen der Schraube angewendetes Drehmoment und/oder eine Anzahl von Umdrehungen und/oder eine erreichte Vorspannung der Schraube können gespeichert werden. Der Installateur kann hierfür beispielsweise ein geeignetes Markerschreibgerät nutzen, um beispielsweise auf einem bereits auf der installierten Komponente befindlichen Marker die zusätzliche installationsspezifische Information abspeichern zu können. Beispielsweise kann ein Werkzeug, insbesondere ein Schrauber, mit dem die Aufzugskomponente installiert wird über ein Markerschreibgerät verfügen, das die genannten Informationen nach Abschluss der Installation der betreffenden Aufzugskomponente auf dem Marker abspeichert. Alternativ kann der Installateur einen ergänzenden Marker, auf dem die installationsspezifische Information gespeichert ist, erstellen und an der Aufzugkomponente anbringen.

Es ist auch möglich, dass an Aufzugskomponenten Einstellungen gemacht werden müssen, die entweder bereits vor der Montage oder auch während der Montage durchgeführt werden. Derartige Einstellungen können beispielsweise bei einer Fangbremse ein Bremsmoment oder bei einer Geschwindigkeitsüberwachung eine maximal erlaubte Geschwindigkeit sein. Diese Einstellungen können ebenfalls auf dem Marker abgelegt und später ausgelesen werden.

Gemäß einer Ausführungsform umfasst das vorgeschlagene Verfahren ferner ein Ausgeben eines Protokolls, welches die ausgelesenen komponentenspezifischen Informationen und gegebenenfalls die installationsspezifischen Informationen für alle markierten Aufzugkomponenten angibt. Mit anderen Worten können die im Rahmen des Verfahrens ausgelesenen Informationen über die im Aufzugschacht aufgenommenen Aufzugkomponenten in Form eines Protokolls ausgegeben werden.

Ein solches Protokoll kann in einer für einen Menschen lesbaren Form ausgegeben werden. Beispielsweise kann das Protokoll als Liste ausgedruckt werden. In einer solchen Liste können beispielsweise alle in dem Aufzugschacht aufgenommenen Aufzugkomponenten zusammen mit ihren komponentenspezifischen Informationen aufgelistet sein.

Alternativ kann das Protokoll in einer maschinenlesbaren Weise erstellt werden, beispielsweise als elektronisches Protokoll. Ein solches maschinenlesbares Protokoll kann einfach beispielsweise zu Analysegeräten übertragen werden oder beispielsweise elektronisch gespeichert werden.

Gemäß einer weiteren Ausführungsform kann das Verfahren ferner ein Vergleichen der ausgelesenen installationsspezifischen Informationen mit Soll-Vorgaben umfassen. In diesem Fall kann das Verfahren ergänzend ein Ausgeben eines Protokolls umfassen, welches beispielsweise Übereinstimmungen und/oder Unterschiede zwischen den ausgelesenen installationsspezifischen Informationen einerseits und den Soll-Vorgaben andererseits angibt. Dabei können die Übereinstimmungen und/oder Unterschiede bezüglich der installationsspezifischen Informationen im Protokoll bezüglich der komponentenspezifischen Informationen enthalten sein oder es kann ein separates Protokoll bezüglich der installationsspezifischen Informationen erstellt werden.

Gemäß einer weiteren Ausführungsform können beim Durchführen des vorgeschlagenen Verfahrens ferner aus einer Signalstärke eines von einem der Marker generierten Signals eine Ortsinformation über einen Abstand des Markers von dem Markerlesegerät und/oder eine Position des Markers relativ zu dem Markerlesegerät abgeleitet werden.

Insbesondere bei einer Verwendung von RFID-Tags als Marker ist vorstellbar, dass ein von einem RFID-Tag generiertes oder rückreflektiertes Radiowellensignal bei Detektion durch das Markerlesegerät eine deutlich höhere Signalstärke aufweist, wenn der Marker sich nahe bei dem Markerlesegerät befindet, als für einen Fall, bei dem der Marker fern des Markerlesegeräts positioniert ist. Durch Analyse einer solchen Signalstärke kann somit auf einen Abstand des Markers von dem Lesegerät rückgeschlossen werden und gegebenenfalls sogar eine Position des Markers relativ zu dem Lesegerät abgeleitet werden. Hierdurch ist es möglich, Positionen von Markern und damit auch Positionen von Aufzugkomponenten innerhalb des Aufzugschachts bei der Durchführung des hierin beschriebenen Verfahrens mitzubestimmen und beispielsweise als zusätzliche Information auszugeben bzw. in einem Protokoll wiederzugeben und/oder auf dem Marker abzuspeichern.

Alternativ oder zusätzlich kann beim Durchführen des vorgeschlagenen Verfahrens ferner über eine Kopplung mit einer Positionsmesseinheit eine Ortsinformation über eine Position des Markers im Aufzugsschacht abgeleitet werden. Diese kann ebenfalls im Protokoll wiedergegeben und/oder auf dem Marker abgespeichert werden. Die genannte Positionsmesseinheit wird insbesondere für den Betrieb der Aufzugsanlage benötigt. Diese Kopplung mit einer Positionsmesseinheit kann auch ohne das Vergleichen von ausgelesenen komponentenspezifischen Informationen mit Soll-Vorgaben und dem Ausgeben eines Protokolls, welches Übereinstimmungen und/oder Unterschiede zwischen den ausgelesenen komponentenspezifischen Informationen einerseits und den Soll-Vorgaben andererseits angibt, vorteilhaft angewandt werden.

Die Positionsmesseinheit kann beispielsweise über im Aufzugschacht verteilte Sensoren verfügen, die mit entsprechenden Gegenstücken beispielsweise an der Aufzugkabine zusammenwirken können. Damit kann eine genaue Position der Aufzugkabine und damit eines an der Aufzugskabine angeordneten Markerlesegerät innerhalb des Aufzugschachts bestimmen zu können. Anhand dieser Information kann auf die Position des ausgelesenen Markers geschlossen werden. Neben der genannten Positionsmesseinheit sind weitere, dem Fachmann bekannte absolute oder relative Positionsmesseinheiten verwendbar.

Gemäß einer Ausführungsform kann das hierin vorgeschlagene Verfahren vorzugsweise im Rahmen einer Endabnahme eines Aufzugsystems durchgeführt werden. Eine solche Endabnahme findet typischerweise statt, nachdem eine Aufzuganlage vollständig installiert und überprüft wurde und bevor die Aufzuganlage ihren normalen Betrieb aufnehmen darf. In einem solchen Stadium ermöglicht das hierin vorgestellte Verfahren, die bereits installierten Aufzugkomponenten und die daran angebrachten Marker zu nutzen und insbesondere eine bereits montierte Aufzugkabine als verfahrbares Aufzugelement zu nutzen, um durch temporäres Anbringen eines Markerlesegeräts an diesem verfahrbaren Aufzugelement und anschließendes Verfahren des verfahrbaren Aufzugelements durch den gesamten Aufzugschacht in einfacher und zuverlässiger Weise ein Protokoll mit Informationen über die in dem Aufzugschacht aufgenommenen Aufzugkomponenten erstellen zu können.

Das vorgeschlagene Verfahren kann außerdem auch nach einer Reparatur bzw. Austauschs eines oder mehrerer Aufzugskomponenten durchgeführt werden.

Es ist auch möglich, dass installationsspezifische Informationen über alle oder einige Aufzugskomponenten oder das erzeugte Protokoll auf einem zusätzlichen Marker abgespeichert und im Aufzugsschacht angebracht wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

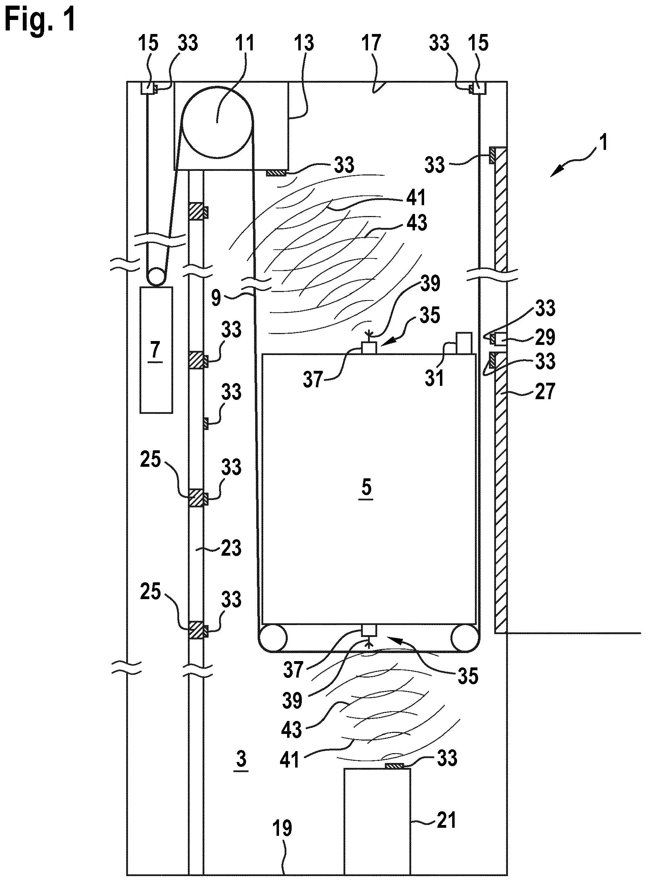

Fig. 1 zeigt eine Aufzuganlage, welche zur Anwendung eines erfindungsgemäßen Verfahrens angepasst ist.

Die Figur ist lediglich schematisch und nicht maßstabsgetreu.

Fig. 1 zeigt eine Aufzuganlage 1, bei der in einem Aufzugschacht 3 zwei verfahrbare Aufzugelemente 5, 7 in Form einer Aufzugkabine 5 und einem Gegengewicht 7 vertikal verfahren werden können. Die Aufzugkabine 5 wie auch das Gegengewicht 7 werden durch ein Tragmittel 9 in Form eines oder mehrerer Riemen oder Seile gehalten. Das Tragmittel 9 kann über eine Treibscheibe 11 eines mit einem Motor versehenen Antriebs 13 verlagert werden, um die daran aufgehängte Aufzugkabine 5 und das Gegengewicht 7 in entgegengesetzte Richtungen innerhalb des Aufzugschachts 3 zu verfahren. Die Enden des Tragmittels 9 sind jeweils an Befestigungsvorrichtungen 15 an einer Decke 17 des Aufzugschachts 3 befestigt.

In dem Aufzugschacht 3 ist zusätzlich zu den genannten verfahrbaren Aufzugelementen und fest installierten Aufzugkomponenten eine Vielzahl weiterer Aufzugkomponenten aufgenommen. Beispielsweise ist an einem Boden 19 des Aufzugschachts 3 ein Puffer 21 vorgesehen. An Wänden des Aufzugschachts 3 können Führungsschienen 23 mithilfe von Halteklammern 25 ("brackets") befestigt sein. Die Führungsschienen 23 können beispielsweise dazu dienen, die Aufzugkabine 5 oder das Gegengewicht 7 bei einer Vertikalbewegung zu führen. Angrenzend an Stockwerke können Schachttüren 27 vorgesehen sein, welche einen Zugang zu einer in einem Stockwerk haltenden Aufzugkabine 5 freigeben können. Ferner können in dem Aufzugschacht 3 Sensoren 29 oder andere Teile einer Sensorik vorgesehen sein, die mit entsprechenden Gegenstücken 31 beispielsweise an der Aufzugkabine 5 zusammenwirken können, um beispielsweise eine genaue Position der Aufzugkabine 5 innerhalb des Aufzugschachts 3 bestimmen zu können. Die Sensoren 29 und das Gegenstück 31 bilden damit eine Positionsmesseinheit für die Position der Aufzugskabine 5. Über die beispielhaft genannten Aufzugkomponenten hinaus können noch weitere Aufzugkomponenten in dem Aufzugschacht 3 angeordnet sein.

Im Allgemeinen werden die Aufzugkomponenten einer Aufzuganlage 1 bei deren Konzeption speziell ausgewählt, um den für die konkrete Aufzuganlage vorgegebenen Anforderungen und/oder Regularien gerecht werden zu können. Dazu wird jede Aufzugkomponente hinsichtlich beispielsweise ihrer Art und Funktionsweise genau spezifiziert und beispielsweise ein bestimmter Ausführungstyp einer Aufzugkomponente wie beispielsweise einer Halteklammer 25 für den konkreten Anwendungsfall ausgewählt.

Beim Installieren der Aufzuganlage 1 können jedoch Umstände auftreten, die es erforderlich machen, nicht exakt diejenigen Aufzugkomponenten tatsächlich zu installieren, wie sie in der Konzeptionsphase geplant wurden. Nachdem die Aufzuganlage 1 fertiggestellt wurde, ist im Rahmen einer Endabnahme meist vorgesehen, ein Protokoll mit den in dem Aufzugschacht 3 tatsächlich verbauten Aufzugkomponenten zu erstellen.

Um die Erstellung eines solchen Protokolls zu vereinfachen, wird an jeder relevanten Aufzugkomponente ein geeigneter, maschinell auslesbarer Marker 33 angebracht. Der Marker 33 trägt darauf gespeicherte komponentenspezifische Informationen wie zum Beispiel Art, Typ, Baujahr, Seriennummer, Spezifikation etc. der jeweiligen Aufzugkomponente.

Beispielsweise im Rahmen der Endabnahme kann dann an einer der verfahrbaren Aufzugelemente 5, 7, beispielsweise an der Kabine 5, ein Markerlesegerät 35 angebracht werden. Das Markerlesegerät 35 ist dabei dazu ausgelegt, die in den Markern 33 gespeicherte komponentenspezifische Information auszulesen, vorzugsweise berührungslos.

Im dargestellten Beispiel ist sowohl an der Oberseite als auch an der Unterseite der Aufzugkabine 5 jeweils ein Markerlesegerät 35 angeordnet. Hierdurch können sowohl oberhalb der Aufzugkabine 5 befindliche als auch unterhalb der Aufzugkabine 5 befindliche Marker einfach und mit hoher Genauigkeit ausgelesen werden. Das Markerlesegerät 35 kann lösbar angeordnet sein und lediglich während des Erstellens des gewünschten Protokolls an dem verfahrbaren Aufzugelement 5, 7 temporär angebracht werden.

Im dargestellten Beispiel werden als Marker 33 RFID-Tags eingesetzt, insbesondere vom Typ eines speziellen UHF-RFID-Tags. Ein Markerlesegerät 35 weist eine Steuereinheit 37 sowie eine oder mehrere Antennen 39 auf. Die Steuereinheit 37 kann die Antenne 39 derart ansteuern, dass Radiowellen 41, insbesondere hochfrequente Radiowellen mit einer Frequenz im Bereich von etlichen 100 MHz, emittiert werden. Wenn diese Radiowellen 41 auf einen der als Marker 33 dienenden RFID-Tag trifft, wird eine Informationtragende Welle 43 rückreflektiert, in der die in den RFID-Tag gespeicherte Information kodiert ist. Diese rückreflektierte Welle 43 kann dann wiederum von einem Empfänger, der vorzugsweise Teil des Markerlesegeräts 35 ist, empfangen und dann ausgewertet werden.

Um das gewünschte Protokoll zu erstellen, kann beispielsweise die Aufzugkabine 5, nachdem an ihr das Markerlesegerät 35 bzw. beide Markerlesegeräte 35 angebracht wurden, vertikal durch den Aufzugschacht 3 von einem unteren Ende hin zu einem oberen Ende und/oder umgekehrt verfahren werden. Dabei kommen die Markerlesegeräte 35 sukzessive an allen Aufzugkomponenten und den daran angebrachten Markern 33 vorbei und können deren komponentenspezifische Information auslesen. Um eine gute Auslesegenauigkeit zu ermöglichen, kann es vorteilhaft sein, die verfahrbare Aufzugelement 5, 7 während des Protokollierungsvorganges langsamer zu verfahren als im normalen Betrieb der Aufzuganlage 1. Aus den ausgelesenen Informationen kann dann das gewünschte Protokoll erstellt werden.

Insbesondere können die ausgelesenen Informationen mit Soll-Vorgaben verglichen werden, um beispielsweise ein Protokoll erstellen zu können, in dem Übereinstimmungen und/oder Unterschiede zwischen den tatsächlich im Aufzugschacht 3 installierten Aufzugkomponenten und beispielsweise im Rahmen der Konzeptionsphase vorgegebenen Soll-Aufzugkomponenten angegeben sind.

Gegebenenfalls können in den Markern 33 zusätzlich zu den komponentenspezifischen Informationen auch installationsspezifische Informationen gespeichert werden. Solche installationsspezifischen Informationen können beispielsweise einen Ort oder eine Position im Aufzugsschacht 5, an dem eine Aufzugkomponente installiert wurde, einen Zeitpunkt, zu dem sie installiert wurde, und/oder eine Art und Weise, wie die Aufzugkomponente installiert wurde, wiedergeben. Solche installationsspezifischen Informationen können bereits bei der erstmaligen Installation der Aufzuganlage festgestellt und auf einem jeweiligen Marker 33 gespeichert werden. Alternativ können auch während des späteren Betriebs, das heißt nach der Endabnahme der Aufzuganlage, beispielsweise im Rahmen von Wartungsarbeiten, einzelne Aufzugkomponenten und die Art ihrer Installation modifiziert werden und eine Information hierüber als installationsspezifische Information in dem jeweiligen Marker 33 abgespeichert werden.

Die Position eines Markers 33 im Aufzugsschacht kann beispielsweise über eine Kopplung mit dem aus den Sensoren 29 und dem Gegenstück 31 gebildeten Positionsmesseinheit abgeleitet werden. Mittels der Positionsmesseinheit kann die Position der Aufzugskabine 5 und damit auch des Markerlesegeräts 35 im Aufzugsschacht 3 bestimmt werden. Aus der Position des Markerlesegeräts 35 kann auf die Position eines Markers 33 im Aufzugsschacht 3geschlossen werden. Dazu kann beispielsweise die Signalstärke des Radiowellensignals bei Detektion durch das Markerlesegerät 35 ausgewertet werden.

Zusätzlich können installationsspezifische Informationen über alle oder einige Aufzugskomponenten oder das erzeugte Protokoll auf einem zusätzlichen Marker abgespeichert und im Aufzugsschacht angebracht werden.

Die Marker 33 können auch als Markierung auf Schraubenköpfen, Barcodes oder QR-Codes ausgeführt sein. In diesem Fall ist das Markerlesegerät 35 als eine Kamera ausgeführt, welche die Markierungen, Barcodes oder QR-Codes optisch erfasst, so dass die Informationen ausgelesen werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Bestimmen von Informationen über in einem Aufzugschacht (3) aufgenommene Aufzugkomponenten (13, 15, 21, 23, 25, 27, 29), wobei die Aufzugkomponenten (13, 15, 21, 23, 25, 27, 29) über jeweils einen maschinenlesbaren Marker (33) verfügen, auf oder mit dem komponentenspezifische Information gespeichert ist; welche mit einem Markerlesegerät (35) ausgelesen werden können,
bei welchem ein verfahrbares Aufzugelement (5, 7), an welchem das Markerlesegerät (35) angeordnet ist, durch den Aufzugschacht (3) verfahren wird und dabei die komponentenspezifische Information aus den Markern (33) ausgelesen wird,
**dadurch gekennzeichnet, dass**
das Verfahren ein automatisiertes Vergleichen der ausgelesenen komponentenspezifischen Information mit Soll-Vorgaben, die angeben, welche Aufzugkomponenten (13, 15, 21, 23, 25, 27, 29) in dem Aufzugschacht (3) aufgenommen werden sollen, und ein automatisiertes Ausgeben eines Protokolls, welches Übereinstimmungen und/oder Unterschiede zwischen den ausgelesenen komponentenspezifischen Informationen einerseits und den Soll-Vorgaben andererseits angibt, umfasst.

2. Verfahren nach Anspruch 1, wobei die Marker (33) berührungslos auslesbar sind.

3. Verfahren nach einem der vorangehenden Ansprüche, wobei die Marker (33) elektromagnetisch auslesbar sind.

4. Verfahren nach einem der vorangehenden Ansprüche, wobei die Marker (33) RFID-Tags sind.

5. Verfahren nach einem der vorangehenden Ansprüche, wobei die Marker (33) UHF-RFID-Tags sind.

6. Verfahren nach Anspruch 1 oder 2, wobei die Marker (33) optisch auslesbar sind.

7. Verfahren nach Anspruch 6, wobei die Marker (33) Markierungen, Barcodes oder QR-Codes sind.

8. Verfahren nach einem der vorangehenden Ansprüche, wobei die Marker (33) passive Bauteile sind.

9. Verfahren nach einem der vorangehenden Ansprüche, wobei bei Installation einer Aufzugkomponente (13, 15, 21, 23, 25, 27, 29) ergänzend installationsspezifische Information auf einem Marker (33) gespeichert wird, und wobei während des Verfahrens des verfahrbaren Aufzugelements (5, 7) mitsamt dem Markerlesegerät (35) auch die installationsspezifische Information aus jedem der Marker (33) ausgelesen wird.

10. Verfahren nach einem der vorangehenden Ansprüche, wobei das Verfahren ferner ein Ausgeben eines Protokolls, welches die ausgelesenen komponentenspezifischen Informationen und gegebenenfalls die installationsspezifischen Informationen für alle markierten Aufzugkomponenten (13, 15, 21, 23, 25, 27, 29) angibt, umfasst.

11. Verfahren nach einem der Ansprüche 9 oder 10, wobei das Verfahren ferner ein Vergleichen der ausgelesenen installationsspezifischen Information mit Soll-Vorgaben und ein Ausgeben eines Protokolls, welches Übereinstimmungen und/oder Unterschiede zwischen den ausgelesenen installationsspezifischen Informationen einerseits und den Soll-Vorgaben andererseits angibt, umfasst.

12. Verfahren nach einem der Ansprüche 1 bis 5, wobei ferner aus einer Signalstärke eines von einem der Marker (33) generierten Signals eine Ortsinformation über einen Abstand des Markers (33) von dem Markerlesegerät (35) und/oder eine Position des Markers (33) relativ zum Markerlesegerät (35) abgeleitet wird.

13. Verfahren nach einem der vorangehenden Ansprüche, wobei über eine Kopplung mit einer Positionsmesseinheit (29, 31) eine Ortsinformation über eine Position des Markers im Aufzugsschacht (3) abgeleitet wird.

14. Verfahren nach einem der vorangehenden Ansprüche, wobei das Verfahren im Rahmen einer Endabnahme einer Aufzuganlage (1) durchgeführt wird.

## Claims

1. Method for determining information relating to elevator components (13, 15, 21, 23, 25, 27, 29) received in an elevator shaft (3), the elevator components (13, 15, 21, 23, 25, 27, 29) each being provided with a machine-readable marker (33) on which or by means of which component-specific information is stored, which can be read out by means of a marker reading device (35),
in which method a movable elevator element (5, 7), on which the marker reading device (35) is arranged, is moved through the elevator shaft (3) and the component-specific information is read out from the markers (33).
**characterized in that**
the method comprises an automated comparison of the read-out component-specific information with nominal specifications, which indicate which elevator components (13, 15, 21, 23, 25, 27, 29) are to be received in the elevator shaft (3), and the automated compiling of a report indicating differences of conformity and/or differences between the read-out component-specific information and the nominal specifications.

2. Method according to claim 1, wherein the markers (33) can be read out in a contactless manner.

3. Method according to either of the preceding claims, wherein the markers (33) can be read out electromagnetically.

4. Method according to any of the preceding claims, wherein the markers (33) are RFID tags.

5. Method according to any of the preceding claims, wherein the markers (33) are UHF RFID tags.

6. Method according to claim 1 or 2, wherein the markers (33) can be read out optically.

7. Method according to claim 6, wherein the markers (33) are marks, barcodes or QR codes.

8. Method according to any of the preceding claims, wherein the markers (33) are passive component parts.

9. Method according to any of the preceding claims, wherein additional installation-specific information is stored on a marker (33) when an elevator component (13, 15, 21, 23, 25, 27, 29) is installed, and wherein the installation-specific information is read out from each of the markers (33) while the movable elevator element (5, 7), together with the marker reading device (35), is being moved.

10. Method according to any of the preceding claims, wherein the method further comprises the compiling of a report indicating the read-out component-specific information and optionally the installation-specific information for all the marked elevator components (13, 15, 21, 23, 25, 27, 29).

11. Method according to either claim 9 or claim 10, wherein the method further comprises a comparison of the read-out installation-specific information with nominal specifications, and the compiling of a report indicating instances of conformity and/or differences between the read-out installation-specific information and the nominal specifications.

12. Method according to any of claims 1 to 5, wherein location information relating to a distance of the marker (33) from the marker reading device (35) and/or a position of the marker (33) relative to the marker reading device (35) is also derived from a signal strength of a signal generated by one of the markers (33).

13. Method according to any of the preceding claims, wherein location information relating to a position of the marker in the elevator shaft (3) is derived by a coupling connection to a position measuring unit (29, 31).

14. Method according to any of the preceding claims, wherein the method is carried out within the context of a final acceptance test of an elevator system (1).

## Revendications

1. Procédé de détermination d'informations concernant des composants d'ascenseur (13, 15, 21, 23, 25, 27, 29) logés dans une cabine d'ascenseur (3), dans lequel les composants d'ascenseur (13, 15, 21, 23, 25, 27, 29) disposent chacun d'un marqueur lisible par machine (33) sur lequel ou au moyen duquel des informations spécifiques aux composants sont enregistrées, lesquelles informations peuvent être lues à l'aide d'un lecteur de marqueur (35), dans lequel un élément d'ascenseur mobile (5, 7), sur lequel est disposé le lecteur de marqueur (35), est déplacé à travers la cabine d'ascenseur (3) et ainsi, les informations spécifiques aux composants sont lues à partir des marqueurs (33), **caractérisé en ce que** le procédé comprend une comparaison automatique des informations lues spécifiques aux composants, comportant les spécifications cibles qui indiquent quels composants d'ascenseur (13, 15, 21, 23, 25, 27, 29) doivent être logés dans la cabine d'ascenseur (3), et une émission automatique d'un protocole qui indique les correspondances et/ou les différences entre les informations lues spécifiques aux composants, d'une part, et les spécifications cibles, d'autre part.

2. Procédé selon la revendication 1, dans lequel les marqueurs (33) peuvent être lus sans contact.

3. Procédé selon l'une des revendications précédentes, dans lequel les marqueurs (33) peuvent être lus par voie électromagnétique.

4. Procédé selon l'une des revendications précédentes, dans lequel les marqueurs (33) sont des étiquettes RFID.

5. Procédé selon l'une des revendications précédentes, dans lequel les marqueurs (33) sont des étiquettes RFID UHF.

6. Procédé selon la revendication 1 ou 2, dans lequel les marqueurs (33) peuvent être lus par voie optique.

7. Procédé selon la revendication 6, dans lequel les marqueurs (33) sont des marquages, des codes à barres ou des codes QR.

8. Procédé selon l'une des revendications précédentes, dans lequel les marqueurs (33) sont des composants passifs.

9. Procédé selon l'une des revendications précédentes, dans lequel, lors de l'installation d'un composant d'ascenseur (13, 15, 21, 23, 25, 27, 29), des informations spécifiques à l'installation sont en outre enregistrées sur un marqueur (33), et dans lequel, pendant le déplacement de l'élément d'ascenseur mobile (5, 7) avec le lecteur de marqueur (35), les informations spécifiques à l'installation sont également lues à partir de chaque marqueur (33).

10. Procédé selon l'une des revendications précédentes, le procédé comprenant en outre l'émission d'un protocole indiquant les informations lues spécifiques aux composants et, éventuellement, les informations spécifiques à l'installation pour tous les composants d'ascenseur marqués (13, 15, 21, 23, 25, 27, 29).

11. Procédé selon l'une des revendications 9 ou 10, le procédé comprenant en outre la comparaison des informations lues spécifiques à l'installation aux spécifications cibles et l'émission d'un protocole indiquant des correspondances et/ou des différences entre les informations lues spécifiques à l'installation, d'une part, et les spécifications cibles, d'autre part.

12. Procédé selon l'une des revendications 1 à 5, dans lequel, en outre, l'on déduit, à partir d'une intensité de signal d'un signal généré par l'un des marqueurs (33), une information d'emplacement concernant une distance du marqueur (33) par rapport au lecteur de marqueur (35) et/ou une position du marqueur (33) par rapport au lecteur de marqueur (35).

13. Procédé selon l'une des revendications précédentes, dans lequel l'on déduit une information d'emplacement concernant une position du marqueur dans la cabine d'ascenseur (3) par l'intermédiaire d'un couplage à une unité de mesure d'emplacement (29,31).

14. Procédé selon l'une des revendications précédentes, le procédé étant réalisé dans le cadre d'une inspection finale d'une installation d'ascenseur (1).
